# EUROPEAN PATENT APPLICATION

(11) **EP 2 551 639 A1**
(43) Date of publication of application: **30.01.2013**
(21) Application number: 11462012.3
(22) Date of filing: 27.07.2011
(51) Int. Cl.: G01C 21/34, G01C 21/36

(54) **Routing method for road navigation devices with ranking of route alternatives and road navigation device**

(71) Applicant: NNG Szoftverfejlesztö Kft., 1016 Budapest (HU)
(72) Inventor: Fülöp, Miklós, 1016 Budapest (HU)
(74) Representative: Harangozo, Gabor

(57) **Abstract**

The method according to the invention comprises the steps of collecting traffic information about each road segment covered by the vehicle at each junction reached by the same vehicle; in accordance with at least one pre-selected navigation mode, defining the route alternatives containing the road segments starting from the next junction and leading to the destination; collecting traffic information about the route alternatives running from the next junction; based on the traffic information about the single route alternatives, assigning a Q-value to each route alternative running from the next junction; ranking the route alternatives according to their Q-value, and informing the user about the rank of the road segments running from the next junction.

The navigation device according to the invention is adapted to perform the above method.

## Description

The invention relates to vehicular route navigation in general. More specifically, the invention relates to a route calculation method and a navigation device using such method, which focuses on ranking the possible heading directions (directions of flow) at junctions, or bifurcations, with taking the latest traffic information into account.

Nowadays, end users often reach their destination by following routes pre-calculated by widely used, typically in-car navigation devices. Using the user's current location as a starting point, today's navigation devices normally recalculate the route to the set destination if the user detours the originally recommended one. Route calculation in general is done according to a pre-set (or modifiable) navigation mode (e.g. distance, speed, economy, etc.). One of the disadvantages of this method is that based on the pre-set navigation mode and the pre-loaded traffic information (speed limits, length of road segments, etc.), it recommends only one route to the user, and at the time of calculation it lacks accurate and detailed information about the prevailing traffic conditions. Temporary road blocks, traffic jams, traffic accidents and so on may render the recommended route unsuitable for reaching the destination within an acceptable period of time, as compared to an alternative route.

The invention is designed to address these problems.

On the one hand, the above objectives are achieved by providing a route calculation method developed for a navigation device used in vehicular traffic, the method comprising, regarding each junction reached by the vehicle:
- obtaining traffic information about the road segment covered by the vehicle,
- based on at least one pre-set navigation mode, calculating route alternatives containing the road segments running from the next junction to the destination,
- collecting traffic information about the route alternatives running from the next junction,
- based on the traffic information of the route alternatives, defining a Q-value for each route alternative running from the next junction,
- ranking the route alternatives in the order of their Q-value, and
- informing the user about the ranking of the road segments running from the next junction.

In a preferred embodiment of the method, the Q-value of each route alternative is defined according to a variety of navigation modes, the route alternatives are ranked in a special order according to the various navigation modes, and the user is informed according to which navigation mode the given route alternatives have the highest Q-value.

If more than one road segments are ranked as optimal according to a given navigation mode, the user will preferably also be informed about the order of the road segments listed according to the given navigation mode.

Traffic information may include at least one of the following elements: the vehicle's driving attributes, especially its average speed; the vehicle's driving dynamics (e.g. acceleration) based on the vehicle's telemetric features (e.g. with the use of a gyroscope); environmental brightness; the level of congestion on the given road segment; based on the signals of the lane sensor: information on the limits of possible maneuvers; based on the signals of the seat sensor: depending on the number of passengers, information on the use of the carpool lane; based on the signals of the drag hook or suspension sensor: information on having a trailer and/or the actual weight of the vehicle; traffic information collected from external sources.

Traffic information from external sources may be collected, for instance, in the form of RDS-TMC signals and/or by sending a query to an online traffic information database.

Preferably, the pre-set navigation mode of the preferred embodiment is one of the following options: the fastest route, the shortest route, the most economical route.

On the other hand, the above objectives are achieved by providing a navigation device used in vehicular traffic, which comprises at least a positioning unit, a map database, a route calculating module and a display unit. In addition, the device comprises at least one of the following traffic information interfaces: an interface receiving the signals of the sensors detecting the vehicle's driving attributes; an interface receiving the signals of the vehicle's telemetric emitters; a communication interface connecting to the external traffic information sources. Furthermore, to evaluate the route alternatives running from the next junction in a variety of directions, the device comprises an assessment unit, which analyses the data received through at least one traffic information interface; a ranking unit to rank the said route alternatives according to at least one pre-set navigation mode. The display unit is adapted to display the rank of the route alternatives attained according to at least one navigation mode.

The invention will now be described in details with reference to the drawings, in which:
- Figure 1 is the map of an illustrative junction indicating the rank of the various directions,
- Figure 2 is the map of the illustrative junction shown in Figure 1, indicating the rank of the various directions and showing the route alternative with the optimal road segment,
- Figure 3 is the symbolic visualization of the illustrative junction shown in Figure 1, indicating the rank of the various directions without displaying any mapping elements.

Contrary to today's route calculation methods, the method according to the invention does not or does not only support the user to reach their destination by giving (visual and voice) guidance to the pre-calculated (optimal) route, but it continuously assesses the possible route alternatives leading to the destination by making use of the pre-loaded or online map data as well as the information detected by the various sensors or telemetric emitters of the vehicle. To assess the route alternatives, traffic information collected from external sources can also be used. Consequently, the user can be continuously informed about the optimal and less optimal routes leading to the destination, or if a maneuver makes it impossible to reach the destination (e.g. due to a dead end or blocked road, or a too long or time-consuming detour).

Once the user has defined the desired destination, an optimal route is calculated on the basis of the available map data (with taking the other parameters set by the user into consideration).

While the vehicle is heading towards the next possible junction (e.g. crossroads), the available route alternatives are continuously calculated. With taking into account all the possible circumstances (traffic regulation, weather, etc.), the device calculates and ranks the possible maneuvers with respect to the next junction. Once the ranking is finished, depending on how good the maneuver would be to reach the destination, a Q-value is attributed to each maneuver.

The Q-value is defined, for example, as the ratio of the length of the avoided road segment to that of the detour. In this case, the optimal Q-value is preferably set as a value higher than 1, e.g. maximized at approximately 1.5. This means that if instead of the next 200 meters, the user has to drive 300 meters to get back to the same road, it is still acceptable. However, travelling 400 meters instead of the next 200 meters is unacceptable.

In the method according to the invention the sensors of the vehicle can help to assess the route alternatives and define their Q-value. Such sensors may include:
- an acceleration sensor, which from the acceleration and deceleration values concludes that there is a conjunction,
- a camera, which determines whether there is a moving vehicle in front of the user's one (detects conjunctions),
- a light sensor, which recognizes tunnels or bad weather (e.g. for traffic safety reasons, the program may prefer main roads),
- a lane sensor,
- a seat sensor,
- a drag-hook or suspension sensor.

In addition, to assess route alternatives, the data given by the vehicle's telemetric emitters, such as the vehicle's speed and other data (e.g. the flashing direction indicator may anticipate a maneuver premeditated by the driver), can also be taken into consideration.

Furthermore, to assess route alternatives, the method can also take into account the traffic information (TMC) broadcast via FM radios and the data received from the online traffic information databases.

Mainly built in the RDS data receiver of the radio transmitters, the TMC broadcasts traffic information in an "alert c" format. The data transmission is continuous, and the RDS channel incessantly transmits the "events" to the receiver. An "event" (data package) provides relevant information (or the cancellation of a former piece of information, such as a traffic jam) about a given road segment. Once all the current events are broadcast, the transmitter restarts to send the events "from the top of the list". Events of crucial importance (e.g. a vehicle travelling in the opposite direction on a highway) may be repeatedly broadcast by the service provider, so that the information is received by every device in the fastest and most reliable way.

The type of information broadcast by the TMC system may vary considerably, and the service provider decides how detailed the data is. The minimum requirement is to inform users about major traffic jams and road blocks.

Almost all TMC service providing companies/authorities have an online database; however, they are usually available only to navigation providers and are not directly accessible to end users. End users can normally purchase such services only to a given software solution from the distributor of the software. As the data communication standard of the online TMC services is not public, the online access of such databases is generally heavily restricted.

The method according to the invention, however, informs the users continuously and well in time about the Q-value of the pre-calculated (or in certain cases, recalculated) optimal routes and the possible route alternatives, or alternative directions, running from the next junction.

Visualization is preferably used to provide an overview of the route alternatives; voice guidance is only a supplementary element. The visual information can be displayed on the map screen of the navigation device and/or in the form of simple icons and symbols. Some examples of how the Q-value of the possible routes can be displayed will be introduced below.

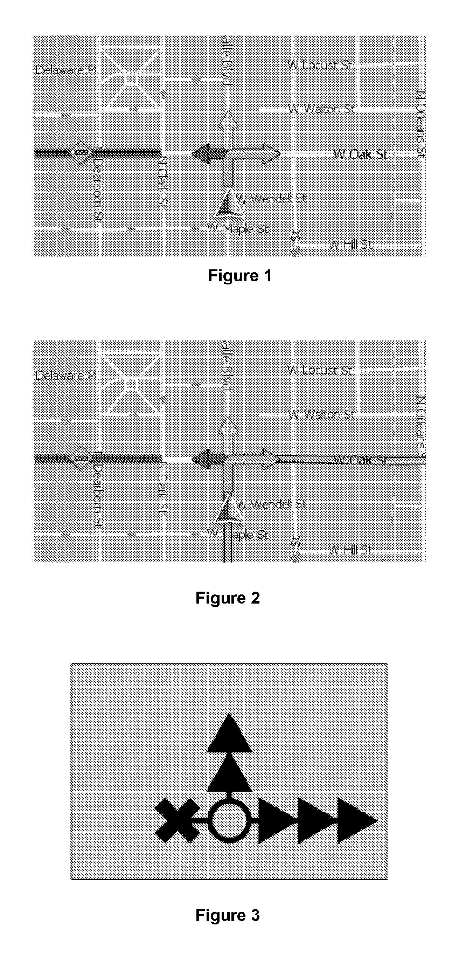

Figure 1 shows a map segment, where the pre-calculated optimal route turns to the right at the next junction. However, if the driver decides to go straight along, they can also reach their destination by following a less optimal route. At the same time, if the driver turned to the left at the junction, they would arrive at a block on the road. Consequently, in Figure 1 the road segment heading to the right is marked in green (as the best option), the one that goes straight along is in orange (as a moderately good option), while the one heading to the left is in red (as a wrong direction). Instead of using color codes, the quality of the various directions can also be indicated by a variety of other methods (e.g. numbers, symbols, flashing lights with different frequencies).
Figure 2 is the map of the junction shown in Figure 1, however, in addition to the quality (rank) of the directions, marked with different colors (green, orange, red), the route alternative with the optimal road segment is also displayed.
Figure 3 shows the above situation without a map, with displaying icons (symbols) only. In such cases, instead of map-based visual guidance, the navigation device may temporarily (for example, until the driver leaves the junction behind) provide icon-based visual guidance.

In a preferred embodiment of the method, a Q-value is defined for each route alternative according to the various navigation modes, and the route alternatives are ranked according to the separate navigation modes. Once a junction is reached, the user is informed according to which navigation mode the given road segments running from the given junction has the highest Q-value.

If more than one road segments are ranked as optimal according to a given navigation mode, the user will also be informed about the order of the road segments listed according to the given navigation mode.

Once the junction (e.g. crossroads) is left behind, the optimal route is recalculated if needed (with taking into account all the factors that forced the driver to make a detour). To achieve this, along with the pre-loaded map data and traffic information, the traffic information collected from external sources (sensors, emitters, external databases) is used again. This is repeated as long as the driver reaches their destination.

In a preferred embodiment of the method according to the invention, in addition to the optimal and less optimal directions leading from the given junction to the destination, the user is also informed on the navigation modes according to which the given route alternatives are assessed. An icon next to a given direction may indicate according to which navigation mode that particular direction has been ranked as optimal or less optimal. Icons may also indicate whether the given route has been selected on the basis of the map data (that is, because it is the shortest or the fastest route leading to the destination), or whether it is an optimal or less optimal one according to one of the sensors.

If the diver makes a maneuver, which, according to the calculations, makes it impossible to reach the destination (or it actually does, however, the time or length of the detour exceeds a pre-set or pre-calculated value), in a preferred embodiment of the method according to the invention, the driver receives a visual and/or audio warning on the screen of the navigation device.

The invention also relates to a navigation device, which performs the above described route calculation method. The navigation device according to the invention is a handheld device used in vehicular traffic, for instance a handheld computer or telephone, or a pre- or subsequently built in in-dash device, which consists of a hardware and a software component. The hardware is able to run the software that performs the method according to the invention, and has at least the following hardware elements:
● A component used for positioning purposes (e.g. GPS receiver)
● A built-in map and traffic information database
● A display, which is able to display a map or at least the icons of the maneuvers on the device and/or in a projected form (e.g. on the vehicle's
windscreen)

The device may also have one or more of the following optional I/O components:
● Loudspeakers, mainly for broadcasting voice guidance
● A microphone and an associated voice-recognition software component for the non touch-screen use of the device

Furthermore, the device according to the invention is connected to at least one of the following external data sources through an adequate interface:
● Acceleration sensor
● Camera
● Light sensor
● The vehicle's telemetric system
● Other sensors
● Traffic information (TMC) transmitter using radio frequency
● Online database of traffic information

## Claims

1. A route calculation method for a navigation device used in vehicular traffic, **characterized in that** the method comprises:
with regard to each junction reached by the vehicle
- obtaining traffic information about the road segment covered by the vehicle,
- in accordance with at least one pre-selected navigation mode, defining the route alternatives containing the road segments starting from the next junction and leading to the destination,
- collecting traffic information about the route alternatives running from the next junction,
- based on the traffic information of the route alternatives, defining a Q-value for each route alternative running from the next junction,
- ranking the route alternatives in the order of their Q-value, and
- informing the user about the ranking of the road segments running from the next junction.

2. The method of claim 1, further comprising
- defining the Q-value of each route alternative according to several different navigation modes,
- ranking the route alternatives in a special order according to each of the various navigation modes, and
- providing the user with information about each road segment starting from the given junction and according to which navigation mode the given route alternatives have the highest Q-value.

3. The method of claim 2, further comprising the following step: if more than one road segments are ranked as optimal according to a given navigation mode, informing the user about the order of the road segments listed according to the given navigation mode.

4. The method of any one of claims 1 to 3, wherein the traffic information includes one or more features of the following group: the vehicle's driving attributes, in particular its average speed; the vehicle's driving dynamics based on the vehicle's telemetric features; environmental brightness; the level of congestion on the given road segment; traffic information collected from external sources.

5. The method of claim 4, further comprising receiving the traffic information from an external source in the form of TMC signals and/or obtaining said information by a query to an online traffic information database.

6. The method of any one of claims 1 to 5, wherein the pre-selected navigation mode is one of the following modes: the fastest route, the shortest route, the most economical route.

7. A navigation device used in vehicular traffic, comprising at least a positioning unit, a map database, a route calculation module and a display unit, **characterized in that** the device further comprises
- at least one of the following traffic information interfaces: an interface receiving the signals of the sensors detecting the vehicle's driving attributes; an interface receiving the signals of the vehicle's telemetric emitters; a communication interface connecting to the external traffic information sources,
- an assessment unit for evaluating the route alternatives running from the next junction in a variety of directions, and for analyzing the data received through at least one traffic information interface, and
- a ranking unit for ranking said route alternatives according to at least one pre-set navigation mode,
- wherein the display unit is adapted to display the rank of the route alternatives attained according to at least one navigation mode.
